Europäisches Patentamt

European Patent Office

Office européen des brevets

(19)

(11) **EP 0 588 815 B1**

## (12) FASCICULE DE BREVET EUROPEEN

(45) Date de publication et mention
de la délivrance du brevet:
**07.06.2000 Bulletin 2000/23**

(51) Int. Cl.[7]: **G06T 7/00**, G08G 1/16,
G05D 1/03

(21) Numéro de dépôt: **92910047.7**

(22) Date de dépôt: **14.04.1992**

(86) Numéro de dépôt international:
**PCT/FR92/00329**

(87) Numéro de publication internationale:
**WO 93/21596 (28.10.1993 Gazette 1993/26)**

(54) **PROCEDE ET DISPOSITIF D'ANALYSE DE SEQUENCES D'IMAGES ROUTIERES POUR LA DETECTION D'OBSTACLES**

VERFAHREN UND VORRICHTUNG ZUR AUSWERTUNG VON STRASSENBILDSEQUENZEN FÜR DIE ERKENNUNG VON HINDERNISSEN

ROAD IMAGE SEQUENCE ANALYSIS DEVICE AND METHOD FOR OBSTACLE DETECTION

(84) Etats contractants désignés:
**DE FR GB IT SE**

(43) Date de publication de la demande:
**30.03.1994 Bulletin 1994/13**

(73) Titulaire: **THOMSON multimedia
92648 Boulogne Cédex (FR)**

(72) Inventeurs:
• **RABOISSON, Stéphane
F-92045 Paris-La Défense Cédex 67 (FR)**
• **EVEN, Gilles
F-92045 Paris-La Défense Cédex 67 (FR)**

(74) Mandataire:
**Ruellan-Lemonnier, Brigitte et al
THOMSON multimedia,
46 quai A. Le Gallo
92648 Boulogne Cédex (FR)**

(56) Documents cités:
**EP-A- 0 361 914**

• **PROCEEDINGS OF THE FIRST INTERNATIONAL CONFERENCE ON COMPUTER VISION, LONDRES , 8-11 JUIN 1987 NEW YORK pages 557 - 566 DARVIN KUAN ET AL. 'autonomous land vehicle road following'**
• **PROCEEDINGS OF THE 22 ND ASILOMAR CONFERENCE ON SIGNALS,SYSTEMS AND COMPUTERS, PACIFIC GROVE,CALIFORNIE,VOL1 ,31 OCTOBRE 1988 F. CARTOSIO ET AL. 'a fuzzy data-fusion approach to segmentation of colour images'**

EP 0 588 815 B1

## Description

L'invention se rapporte au domaine du traitement d'images et a plus particulièrement pour objet un procédé d'analyse de séquences d'images routières en vue de l'extraction de routes , un dispositif pour sa mise en oeuvre, et son application à la détection d'obstacles.

L'extraction d'informations relatives à la route, par l'intermédiaire d'images a été étudiée dans le cadre d'applications mettant en oeuvre des véhicules de type robot mobile. La détection de route à partir d'images s'est développée dès lors qu'on a voulu rendre autonomes des engins de type robot mobile.

D'une manière générale un traitement dans ce domaine consiste à analyser l'information délivrée par une caméra à capteur CCD sous forme d'un signal vidéo couleur. Les images issues de la caméra portée par le mobile sont stockées en mémoire où elles sont transmises à différents modules de traitement.

Les méthodes classiques de détermination de contours ont été largement employées pour détecter les bords de route, avec plus ou moins de réussite du fait des problèmes d'ombres portées sur la route. En effet, une approche de type modélisation géométrique liée à la recherche de segments forts sur les images peut ne pas correspondre au mieux au modèle ligne droite désiré, notamment dans le cas de conditions non optimales de prises de vues (mauvais temps, données bruitées, . . .).

Les publications qui suivent se rapportent à ces travaux :

- par C. THORPE et al : "Vision and navigation for the Carnegie-MELLON Navlab" I.E.E.E. Transactions on pattern analysis and machine intelligence, vol. 10, n° 3, p. 362-373, mai 1988 ;
- par J.M. LOWRIE et al : "The Autonomous Land Vehicle preliminary road-following demonstration" Proc. SPIE 579 D. P. CASAENT Ed; p. 336-350, septembre 1985
- par M. TURK et al : "VITS : A vision system for Autonomous Land Vehicle navigation" I.E.E.E Trans. PAMI, Vol. 10, n° 3, p. 343-361, mai 1988.

Ces travaux ne peuvent être appliqués au cas de la circulation automobile sur des axes autoroutiers, en vue d'applications dans le domaine de la sécurité routière, du fait des contraintes imposées par ce type d'applications : vitesses élevées et circulation dense.

Dans le cadre de la détection d'obstacles "Hughes Artificial Intelligence Center" a développé des techniques de télémétrie couplées à des bases de connaissances. On se reportera aux travaux de M.J. DAILY et al : "Detecting obstacles in range imagery" Proc. DARPA Image Understanding Worhop, p. 87-97, février 1987. L'avantage d'un tel procédé, utilisant la télémétrie réside dans la possibilité d'obtenir directement les distances séparant le véhicule des obstacles potentiels, en s'affranchissant des problèmes d'éclairement des scènes. Par contre le rayonnement des ondes émises peut être un inconvénient pour rester on conformité avec les normes de sécurité nécessaires.

D'une manière générale l'utilisation d'un capteur optique d'images associé à un procédé de traitement d'images permet de constituer d'un organe de perception pour le véhicule automobile. Dès lors, on peut envisager un grand nombre d'applications basées sur l'analyse de l'image et l'interprétation de scène. Cependant, dans ce contexte, les principaux éléments constituant la scène sont la route et les objets qui s'y trouvent. Il est donc essentiel, préalablement à toute interprétation d'image, d'extraire et de localiser la route par rapport à laquelle le reste de la scène peut ensuite être décrit.

De nombreuses techniques de segmentation sont classiquement utilisées, en traitement d'images, pour regrouper des régions, sous des contraintes de similarité de caractéristiques.

La segmentation de scènes naturelles extérieures est une opération particulièrement complexe s'il faut prendre en compte tous les éléments constituant celles-ci. Les conditions liées à l'environnement et leurs variations ne font qu'accentuer cette difficulté : (différentes saisons, météorologie, éclairage, heures de prises de vue : réflexion spectrale lorsque le soleil est bas, ombres, boue sur la chaussée, . . .).

La publication par D. Kuan et al: "Autonomous Land Vehicle Road Following", Proceedings of the First International Conference on Computer Vision, Londres, 08 à 11 juin 1987, pages 557-566, décrit un procédé d' analyse de séquences d'images routières selon lequel dans une première étape des images RGB sont transformées dans une espace unidimensionnel en utilisant des sommes pondérées de signaux RGB. Les facteurs de pondération sont déterminés pour qu'une discrimination optimale soit obtenue entre les régions routes et non-routes.

Le but de l'invention est le développement d'un procédé d'analyse de séquences d'images routières en vue de l'extraction de voies de roulement (routes) et de la détection d'obstacles à partir de ces images.

L'invention a pour objet un procédé d'analyse de séquences d'images routières performant permettant d'obtenir des informations relatives à la route et éventuellement aux obstacles susceptibles de s'y trouver, applicable même à la circulation sur axes autoroutiers, en vue notamment d'améliorer la sécurité dans la conduite automobile. A partir de ces informations, l'automatisation de certaines fonctions peut être établie et une extension des capacités de perception du conducteur est envisageable lors de longs trajets sur autoroute notamment, par déclenchement d'alarmes ou de signalisation de danger.

Selon l'invention, le procédé d'analyse de séquences d'images routières en vue de l'extraction de routes dans les images, est caractérisé en ce qu'il comporte les étapes définies dans la revendication n° 1.

L'invention a également pour objet un dispositif d'analyse de séquences d'images routières issues d'une caméra et disponibles sous forme de composantes numériques de couleur et après conversion des composantes de couleur, sous forme d'une composante de luminance, destiné à la mise en oeuvre du procédé d'analyse tel que décrit ci-dessus, est caractérisé en ce qu'il comporte les caractéristiques définies dans la revendication n° 6.

L'invention a également pour objet l'application de ce procédé dans un système de détection d'obstacles applicable à la circulation automobile où l'analyse de séquences d'images vidéo routières conduit à l'extraction de routes dans les images et à la localisation éventuelle d'obstacles lorsque le masque de la route est discontinu.

L'invention sera mieux comprise et d'autres caractéristiques apparaîtront à l'aide de la description qui suit en référence aux figures annexées.

La figure 1 est un schéma général d'un système de détection d'obstacles applicable à la sécurité automobile ;

La figure 2 est le schéma synoptique du dispositif d'analyse d'images pour l'extraction de routes selon l'invention ;

La figure 3 est un organigramme du procédé d'analyse d'images mis en oeuvre pour l'extraction de routes ;

La figure 4 est un organigramme détaillé de la phase de calcul des gradients à partir du signal de luminance ;

La figure 5 est l'organigramme de la phase d'analyse couleur ;

La figure 6 est un schéma explicatif ;

La figure 7 est un organigramme de la phase de remplissage du masque de la route ;

Les figures 8 et 9 sont des schémas explicatifs de la fonction remplissage ;

La figure 10 est un schéma synoptique illustrant la mise en oeuvre du procédé selon l'invention en combinaison avec un procédé de détection d'obstacles, dans un système de détection d'obstacles appliqué à la sécurité automobile.

Comme Indiqué ci-dessus l'invention concerne principalement l'extraction de la route et la détection d'anomalies sur les voies de roulement telles que par exemple des problèmes de revêtement sur la chaussée, ou des objets ou véhicules entrant dans la zone de sécurité limitée autour du véhicule roulant, à partir d'une analyse de séquence d'images routières.

La diversité des conditions naturelles d'éclairement et des aspects de la chaussée nécessite un procédé d'extraction "robuste". En partant de l'hypothèse qu'à tout instant le véhicule roule sur la route et que la camera, fixée par exemple au niveau du rétroviseur intérieur, reçoit les informations liées à la route et aux éventuels obstacles s'y trouvant, le dispositif de vision propose "apprend", de manière itérative, puis "reconnaît" l'apparence du revêtement de la chaussée. Le procédé d'extraction de la surface de la route dans l'image est fondé sur l'analyse de caractéristiques des voles de roulement en champ proche (apprentissage) et sur la segmentation de la route en perspective (reconnaissance). Le traitement d'images a pour but de rechercher les attributs de caractérisation nécessaires, c'est-à-dire des informations contours/régions et des données spécifiques couleurs liées à la composition colorimétrique de la chaussée par rapport au fond.

Pour la mise en oeuvre de ce traitement l'invention utilise des opérateurs simples, faciles à mettre en oeuvre dans une architecture dédiée à cette fonction. Un seul capteur vidéo est utilisé pour la mise en oeuvre du procédé d'analyse comme décrit ci-après, ce qui est un facteur économique important quant au coût de réalisation. Cependant, l'adjonction d'autres capteurs du même type (caméra CCD) ou d'autres types (lidar, radar, gyromètre. . . ) permet d'augmenter les possibilités d'analyse telles la stéréo-vision, la reconstruction d'informations tridimensionnelles et la détection active d'obstacles sur la route, dans un système composite de détection d'obstacles.

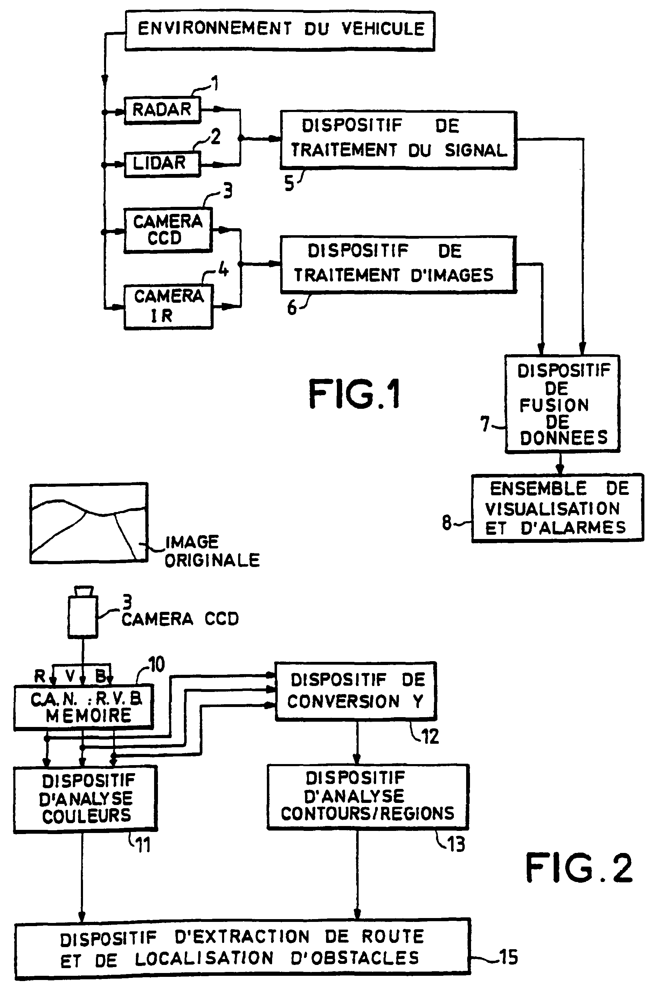

La structure d'un tel système composite de détection d'obstades est illustrée sur la figure 1.

L'environnement du véhicule est analysé par exemple à partir de 4 types d'informations : Des informations détectées par un radar 1, des informations détectées par un lidar 2, des images prises par une caméra CCD, 3 (utilisant un capteur à transfert de charges), et des images prises par une caméra infrarouge IR, 4. Les signaux issus du radar et du lidar sont traités par un dispositif de traitement de signal 5, tandis que les images obtenues des caméras sont traitées par un dispositif de traitement d'images 6. Un dispositif de fusion 7 de l'ensemble des données résultant de ces traitements est alors utilisé pour générer des images et/ou des alarmes sur un ensemble de visualisation et de déclenchement d'alarmes 8 disposé sur le tableau de bord du véhicule.

Le procédé selon l'invention concerne plus particulièrement le traitement d'images mis en oeuvre par le dispositif 6 pour l'extraction de routes de ces images.

La figure 2 est le schéma synoptique du dispositif d'analyse d'images pour l'extraction de routes selon l'invention. L'image de l'environnement du véhicule est prise par la caméra CCD, 3. A partir des trois signaux analogiques de couleur fournis par cette caméra, un ensemble 10 comportant un convertisseur analogique-numérique, convertit ces trois signaux en suites de valeurs numériques ; à ce convertisseur sont associés classiquement dans l'ensemble 10 un circuit de base de temps et une mémoire d'images ; ces images sont transmises d'une part à un dispositif d'analyse de couleurs, 11, et d'autre part à un dispositif de conversion 12 effectuant la combinaison des composantes de couleur pour restituer une suite de valeurs numériques caractérisant la luminance Y des points d'image. La suite des valeurs de luminance est transmise à un dispositif d'analyse de contours et de régions 13. Les informations issues d'une part du dispositif d'analyse de couleurs 11 et d'autre part du dispositif 13 sont transmises à un dispositif d'extraction de routes et de localisation d'obstacles 15.

Le procédé de traitement proprement dit comporte donc trois étapes :

- La première étape consiste en une analyse conjointe des contours et régions pour la détection de la route. Elle utilise l'information luminance du signal vidéo.
- La seconde étape, parallèle à la première, repose sur une analyse des signaux de couleurs (R-V-B), afin d'établir un masque global sur l'image, destiné à confirmer la présence et la position de la route.
- La troisième étape consiste à utiliser judicieusement, comme décrit en détails ci-après, les informations extraites par l'analyse contours/réglons et l'analyse de couleurs, pour aboutir à une détection précise de la route.

Les voies de roulement, ou routes, une fois extraites, permettent une détermination de la zone de manoeuvre du véhicule.

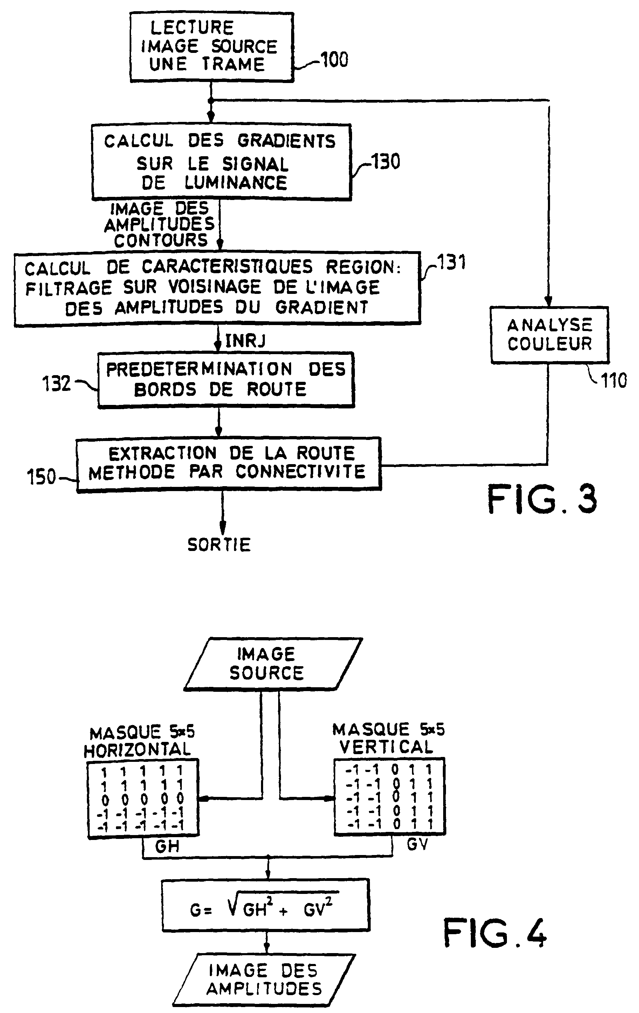

L'étape d'analyse contours/régions du traitement est une étape essentielle du procédé. Elle utilise le signal de luminance, avec la possibilité d'effectuer un sous-échantillonnage temporel (analyse en trame) pour réduire le temps de traitement, ceci permettant une architecture plus simple (liée au temps de calcul). L'organigramme détaillé de cette étape d'analyse contours/régions effectuée par le dispositif 13 est illustré sur la figure 3.

L'image source est lue dans une mémoire d'image dans une étape 100. Pour cela les valeurs du signal de luminance d'une trame sont stockées dans un tableau itab, de dimension (icol, ilig) données, icol et ilig étant respectivement les nombres de colonnes et de lignes du tableau. Chaque élément de ce tableau est codé sur 8 bits, le signal de luminance étant quantifié sur 256 niveaux.

Le calcul de l'amplitude des contours s'effectue dans une étape 130 à l'aide d'opérateurs radient qui sont des masques de convolution connus, de type "PREWITT", en horizontal et en vertical. Ces masques de convolution, de dimension faible (5x5) se prêtent bien à une réalisation temps réel grâce à la structure de leur noyau (addition et soustraction binaire).

Les masques horizontaux et verticaux utilisés sont représentés sur la figure 4 qui détaille l'organigramme de la phase 130 de calcul des gradients sur le signal de luminance. L'image source est convoluée par les masques 5x5, respectivement horizontal et vertical, ce qui conduit aux valeurs de gradient horizontal GH et vertical GV. L'amplitude du gradient G en chaque point est alors calculée par la formule

$$G = \sqrt{GH^2 + GV^2}$$

Une image des contours est alors formée par l'image des amplitudes des gradients ainsi calculés.

On obtient ainsi à la fin de la phase 130 un tableau de dimension (icol, ilig) représentant le résultat du calcul de l'image de l'amplitude des contours, codée sur 16 bits pour chaque point d'image.

Le calcul de la caractéristique région se fait dans une étape 131 (figure 3) à partir de cette image des amplitudes des gradients du signal de luminance. A partir de l'image des contours obtenue dans l'étape précédente, cette opération consiste à effectuer un filtrage moyenneur sur l'image des amplitudes des gradients, de support faible (masques 5x5). Le but est d'obtenir une information relative à l'énergie du signal dans un voisinage local du point considéré, en évitant les problèmes de bruit et de détection quadratique. L'énergie, calculée de manière classique, est égale au carré du signal à mesurer dans une fenêtre centrée sur le point courant. Pour diminuer te temps de calcul et on raison des résultats proches obtenus, seule la valeur simple de ce signal a été utilisée dans un mode de réalisation de l'invention. En sortie, un tableau de dimension (icol, ilig) est alors obtenu, représentant le résultat du calcul de la caractéristique "région", codé sur 8 bits pour chaque point d'image. Cette nouvelle "image" est notée INRJ. Une prédétermination des bords de route est alors effectuée dans une étape 132 à partir de l'image INRJ : un seuillage est effectué pour ne retenir que les niveaux hauts relatifs aux contours des régions. Une première détection des bords de route est alors obtenue avec une meilleure "confiance" que celle qui aurait été obtenue avec un simple seuillage sur l'image originale. Cette étape est complétée par un traitement destiné à rendre connexes les segments de contours détectés.

L'analyse des composantes couleurs, étape 110 sur la figure 3, effectuée par le dispositif d'analyse couleurs 11 de la figure 2 permet de valider le masque de la route obtenu par l'analyse du signal de luminance (contours/régions). Il ne s'agit pas ici d'aboutir à une segmentation de la scène comme décrit ci-dessus, au sens classique du terme, mais plutôt de prendre en compte les qualités intrinsèques de l'information présente dans ces signaux couleurs, pour aboutir à une segmentation de la route confirmée avec une bonne fiabilité, et une robustesse importante. De plus, il est nécessaire que cette procédure de segmentation de la route soit effectuée à une cadence vidéo ou quasi-temps réel.

La méthode de segmentation utilisée dans la phase d'analyse couleur du procédé selon l'invention et décrite ci-après a été motivée par l'aspect architecture en vue d'une réalisation en circuits rapides, ainsi que par les hypothèses selon lesquelles on peut trouver des informations caractéristiques spécifiant l'appartenance ou non à la route des régions analysées.

Selon l'invention l'analyse couleurs effectue une partition en 2 classes seulement : route et non-route. Un point d'image est représenté par un triplet de valeurs de couleurs R-V-B. L'espace des caractéristiques à traiter est donc immédiatement défini.

L'hypothèse de départ est que la discrimination de la route peut s'accomplir par le fait que celle-ci ne comporte pas de dominante colorimétrique verte ni rouge. Les constituants des chaussées font généralement que le revêtement a une teinte bleue ou grise.

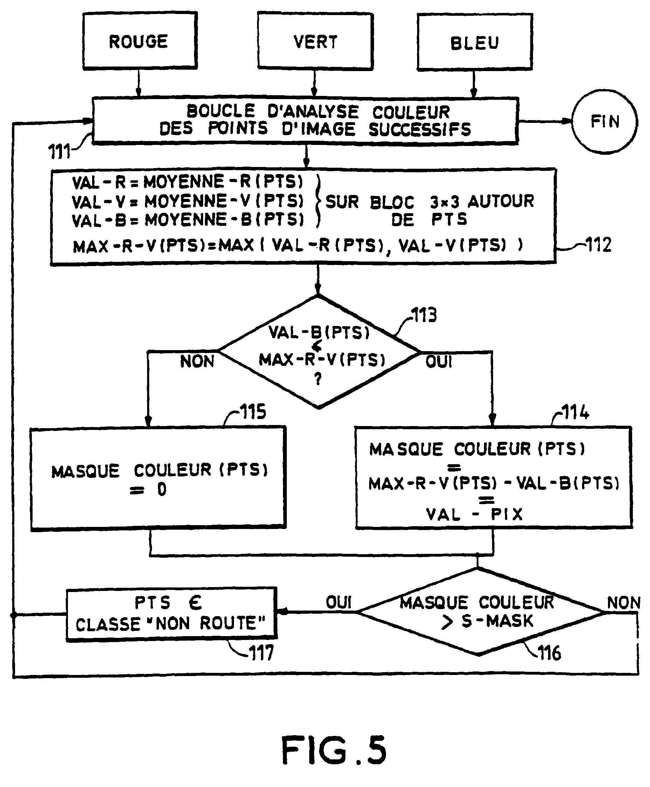

L'analyse couleur, dont l'organigramme est illustré par la figure 5 cherche les points d'image pour lesquels l'écart entre les informations discriminantes des 2 classes "route" et "non-route" est maximum. L'analyse couleur détermine les points où l'écart maximum existe entre la composante moyenne bleue et les composantes moyennes rouge ou verte. Pour cela une boucle d'analyse couleur de l'image 111 décrit les points successifs de l'image et commande à partir des composantes couleurs rouge, verte, bleue le calcul de valeurs :

Soient VAL-R, VAL-V et VAL-B, les valeurs respectives des composantes rouge, verte et bleu, d'un point d'image, moyennées sur des bloc 3x3 autour du point et soit Max-R-V, la valeur maximum des 2 composantes VAL-R et VAL-V calculées dans une étape 112. Une valeur VAL-PIX du masque couleur est attribuée au point d'image analysé étape 114, si le test 113 est vérifié, c'est-à-dire la composante moyenne bleue du point est d'intensité inférieure ou égale à la valeur MAX-R-V, sinon le masque est mis à zéro étape 115. Cette valeur VAL-PIX est égale à l'écart entre les valeurs MAX-R-V et VAL-B.

Au cours du test 116, si, l'écart VAL-PIX est reconnu comme supérieur à un seuil donné S-MASK, le point considéré est affecté à la classe "non-route", étape 117.

Les points de ce masque ne représentent qu'une partie de la classe non-route, mais ils sont avantageusement positionnés de telle façon qu'ils renforcent généralement la détermination des frontières et des bords de route.

Il est possible d'améliorer la détection, en réalisant un filtrage passe-bas de type moyenneur, de support (3x3), avant la décision d'affectation des points au masque "non route".

L'opération de moyennage s'effectue en temps réel vidéo, à l'aide de circuits rapides.

La dernière étape de la phase d'extraction de la route est alors effectuée à partir de la fusion des informations précédemment obtenues à partir des deux analyses des signaux de luminance et de couleur, pour extraire de façon précise les voies de roulement, ou routes. Cette étape 150 (figure 3) est l'extraction de la route à partir de la superposition des informations contours et masque "non-route".

Le problème de la détection de la route est résolu par le remplissage, ou "coloriage" de la région délimitée par les bords de route devenus, par les différentes opérations précédentes, des segments connexes. L'intérêt d'une fermeture des régions par le masque "non-route" réside dans la possibilité de couvrir une zone entière sans "débordement", en évitant d'avoir un masque comportant des points de fuite.

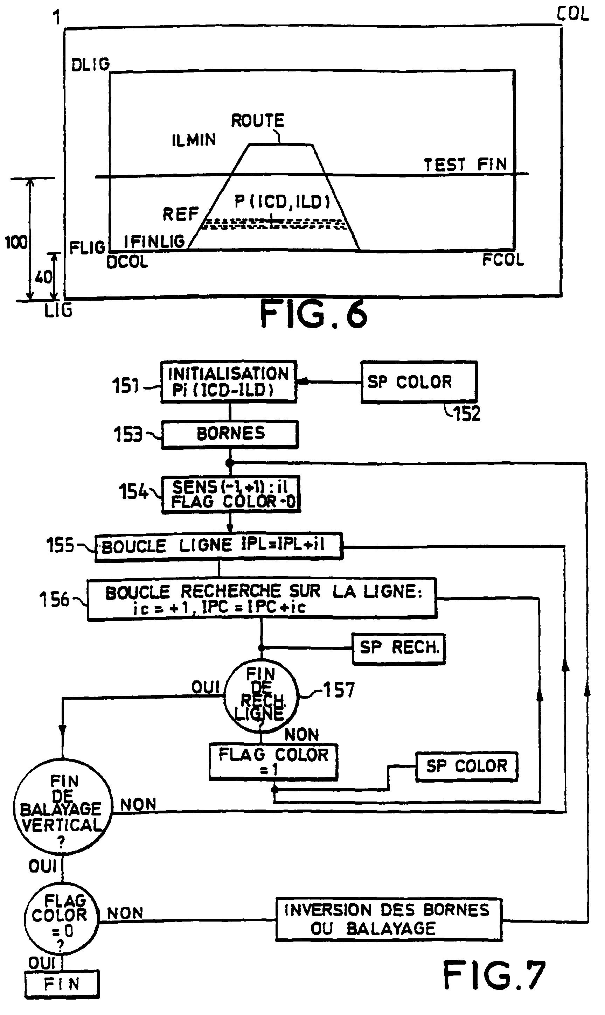

Cette phase d'extraction 150 effectuée par le dispositif d'extraction 15 (Figure 2) est illustrée par les figures 6 à 9 et consiste, dans un premier temps, à repérer un point intérieur aux contours désignés correspondant à la route, de manière automatique en prenant l'hypothèse de présence de la route devant le véhicule ; après quoi un algorithme de "remplissage" propage le remplissage de la route, suivant les directions de balayage horizontale et verticale, jusqu'aux points de contours où le remplissage s'arrête. Ces points contours, sont les points frontières route-bords, contours Issus de la luminance et limites du masque "non-route".

Suivant un mode de réalisation, donné à titre d'exemple, le procédé d'extraction fait appel pour le remplissage à la notion de connectivité. La procédure de remplissage du masque route est décrite ci-après à l'aide des variables suivantes illustrées sur la figure 6 et est illustrée par la figure 7 :

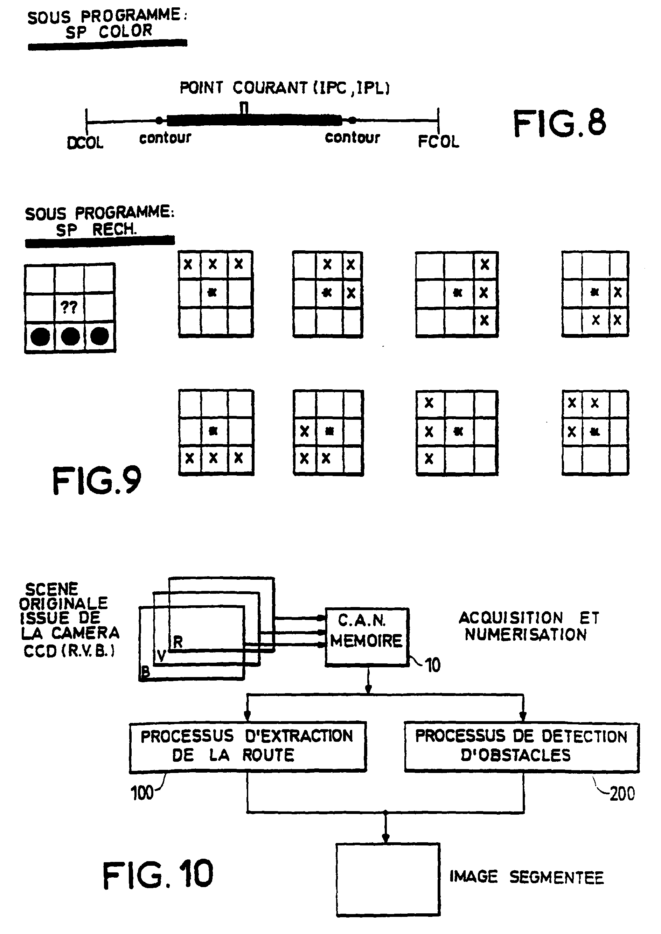

- l'image de départ est de dimension (COL, LIG) ;
- la caméra fixe le centre optique de visée du véhicule, et l'hypothèse de départ est que la route est située devant celui-ci ;
- (IPC, IPL) sont les coordonnées du point courant et (ICD, ILD) celles au point de départ $P_i$ de l'analyse, respectivement en colonne et en ligne avec par exemple : ILD=LIG-100 et ICD=COL/2 pour que le point d'initialisation $P_i$ soit centré en ligne, et placé au bas de l'image correspondant à la scène proche du véhicule, ceci afin d'éviter les problèmes d'obstacles éventuels à une distance plus lointaine. Une phase d'initialisation 151 fait alors appel à un sous programme SP-COLOR 152, qui colorie tous les points de la ligne du point de départ entre les limites constituées par les points de contour sur cette ligne, comme le montre la figure 8.

Cette initialisation sur la ligne du point de départ étant terminée, le remplissage du masque de la route peut alors effectivement commencer. Il permet de rechercher ligne par ligne les points appartenant à la route susceptibles d'être "coloriés" à partir de l'analyse d'une fenêtre (3x3) centrée sur le point courant de la ligne en cours de balayage. La condition du test effectué est que le point doit être différent d'un point contour ou d'un point déjà colorié, et qu'il doit avoir au moins 3 points voisins coloriés. La figure 9 illustre les huit possibilités qui conduisent au coloriage du point courant s'il n'est pas soit un point du contour, soit déjà marqué : Le point courant est le point central de la fenêtre 3x3 noté * et les points voisins déjà coloriés sont marques "x".

Les bornes du masque de la route à colorier résultant de la fusion des informations contours et bords de route sont mémorisées dans une étape 153. Un sens de balayage vertical pour l'analyse ligne par ligne est fixé dans une étape 154 au moyen d'un index d'itération verticale $i_l$, d'abord à +1 par exemple. L'analyse est effectuée ligne par ligne par une boucle ligne 155. Puis une boucle de recherche ligne est effectuée, 156, avec, pour initier un sens de balayage de la ligne, un index $i_c$ mis à +1, puis à -1. Le test 157 de la fenêtre 3.3 autour du point courant est alors mis en oeuvre pour chaque point de la ligne par un sous programme de recherche ligne SP-RECH qui après chaque itération du rang de la colonne, $IPC=IPC+i_c$ du point courant, teste si ce point doit être colorié ou non, selon les configurations illustrées par la figure 8 c'est-à-dire s'il appartient au masque de la route. Lorsque le point est colorié une valeur "FLAG-COLOR" associée à ce point et Initialement à 0 est mise à 1. Lorsque le point courant est un point de contour, un retour au point d'initialisation de la ligne et un changement d'index colonne $i_c$ =-1 permettent de décrire, à partir de ce point, l'autre demi-ligne jusqu'à l'autre un point de contour. La recherche des points à colorier sur cette ligne pour obtenir le masque de la route est alors terminée et la même recherche est effectuée sur une ligne adjacente par itération du rang de la ligne $IPL=IPL+i_l$ .

Le coloriage de la zone commence par la ligne ILREF d'ordonnée ILD et se termine à la ligne IFINLIG=LIG-40 . Lorsque la dernière ligne utile est coloriée, l'indice de ligne est ramené à l'indice ILD de départ et le même procédé est utilisé pour le marquage de la zone supérieure de la coordonnée ligne ILD jusqu'à la ligne d'arrêt du remplissage de coordonnée verticale ILMIN à partir d'un index vertical modifié $i_l$=-1. La ligne d'arrêt ILMIN est donnée par une ligne "contours haut" détectée à la fin de l'analyse des contours et fermant le masque route. Cette étape marque tous les points intérieurs aux points contours en leur affectant un niveau noté "niv-route" et aboutit à la formation d'un "masque de la route".

Comme indiqué ci-dessus, l'information contours/régions permet une détection des bords de route. Elle permet également d'établir une localisation des obstacles potentiels situés sur la route, devant le véhicule.

L'information couleur accentue la confiance du masque de la route obtenu initialement, surtout dans le cas où il n'existe pas de bords francs aux frontières de la chaussée. Ce deuxième masque permet une fermeture des zones d'accotement, favorisant ainsi l'obtention d'un masque global de la route.

La figure 10 illustre la structure générale d'un système de sécurité automobile mettant en oeuvre à partir des signaux issus de la caméra numérisés et mis en mémoire dans le convertisseur à mémoire 10 un processus d'extraction de la route et de localisation de candidats obstacles 100, tel que décrit ci-dessus qui est associé à un processus de détection d'obstacles 200 basé sur d'autres données, comme décrit en référence à la figure 1.

Le procédé selon l'invention tel que décrit ci-dessus vise à déterminer les voies de roulement sur la chaussée, à partir d'un processus d'analyse statique des signaux de luminance et de couleur. Ce procédé peut ensuite être complété phase complémentaire pour permettre une localisation des objets sur la route, et une pré-détermination des obstacles majeurs par une analyse dynamique. En effet une analyse dynamique est nécessaire pour séparer les différents types d'objets détectés par détection de mouvement dans les séquences d'images afin de repérer des objets sur la route et à localiser les obstacles. L'image segmentée résultante met alors en évidence les obstacles situés sur la route.

L'invention n'est pas limitée à la description précise du procédé donnée ci-dessus. En particulier, pour la phase d'extraction de la route, la méthode par connectivité peut être remplacée par toute autre méthode permettant de remplir le masque de la route dont les contours ont été déterminés par l'image des amplitudes des gradients et confirmés par l'analyse couleur, par exemple une méthode de type vectorielle ou toute autre méthode adaptée qui permettrait d'augmenter la rapidité du traitement. De même, les dimensions de fenêtres pour le moyennage peuvent être modifiées tout comme les autres paramètres, dont les valeurs numériques ont été données à titre d'exemple, sans sortir du cadre de l'invention.

## Revendications

1.  Procédé d'analyse de séquences d'images routières, prises par une caméra embarquée à bord d'un véhicule roulant, pour l'extraction de routes dans les images, caractérisé en ce qu'il comporte :

    •   une première étape d'analyse (130, 131, 140) de l'information luminance des signaux vidéo images pour extraire les contours et régions des images et établir un masque de la route;
    •   une deuxième étape (110) d'analyse de l'information de chrominance des signaux video images comprenant les sous étapes de :

        -   détermination des valeurs moyennes des composantes bleues, rouges, vertes pour les points d' image autour d'un point courant et

        -   détermination des points pour lesquels un écart entre le maximum de la valeur moyenne de la composante bleue et la valeur moyenne de la composante rouge ou verte dépasse un seuil prédéfini et affectation d'un point à la classe "non-route" si ledit écart est supérieur audit seuil;

- une troisième étape (150) qui combine le masque de la route obtenu à partir de l'analyse de l'information de luminance avec les points déterminés à partir de l'analyse de l'information de chrominance, pour l'extraction du contour de la route.

2. Procédé selon la revendication 1, caractérisé en ce que l'étape d'analyse de l'information luminance comporte

- une phase (130) de calcul des gradients sur le signal de luminance, les amplitudes des gradients calculés aux différents points d'image constituant une image de contours,
- une phase de calcul d'une caractéristique région définissant un masque de la route à partir de l'image des contours au cours de laquelle un filtrage moyenneur (131) dans un voisinage local du point courant est effectué et donne pour chaque point d'image une valeur caractéristique de l'énergie du signal dans le voisinage local considéré, puis une étape (132) de seuillage pour ne retenir que les valeurs d'énergie supérieures à un seuil, associées aux segments de contours image des bords de route dans l'image, et de traitement des segments de contour pour les rendre connexes, et enfin de remplissage de la région délimitée par les bords de route.

3. Procédé selon l'une des revendications 1 et 2, caractérisé en ce que l'étape d'analyse de l'information de chrominance (110) utilise le fait que dans les séquences images routières, les routes ne comportent pas de dominante colorimétrique verte ou rouge et comporte

- une phase (112) de calcul de composantes moyennes des trois couleurs fondamentales autour d'un point courant, et de détermination de la composante moyenne maximum entre les deux composantes verte et rouge,
- une comparaison (113) de cette valeur maximum et de la valeur de la composante moyenne bleue, suivie d'une phase de test (116) de la différence entre ces valeurs par rapport à un seuil, les points pour lesquels cette différence est supérieure au seuil étant de manière certaine situés en dehors de la route.

4. Procédé selon l'une des revendications 1 à 3, caractérisé en ce que l'étape (150) de combinaison des informations relatives au masque de la route établies au cours de la première étape et les informations relatives à la zone d'image en dehors de la route obtenues dans la deuxième étape établit précisément les voies de roulement contenues dans les séquences images routières initiales et éventuellement de localiser des obstacles sur ces voies de roulement.

5. Procédé selon l'une quelconque des revendications précédentes, caractérisé en ce que l'étape d'analyse de l'information luminance et l'étape d'analyse de l'information de chrominance sont effectuées en parallèle.

6. Dispositif d'analyse de séquences d'images routières issues d'une caméra (3) et disponibles sous forme de composantes numériques de couleur et après conversion des composantes de couleur, sous forme d'une composante de luminance, destiné à la mise en oeuvre du procédé d'analyse selon l'une des revendications 1 à 5, caractérisé en ce qu'il comporte

- un dispositif d'analyse contour et régions (13) dont l'entrée est destinée à recevoir le signal de luminance d'image,
- un dispositif d'analyse couleurs (11) dont l'entrée est destinée à recevoir les trois composantes de couleur, constituant l'image vidéo,
- et un dispositif (15) d'extraction de route relié aux sorties du dispositif d'analyse contours et régions et du dispositif d'analyse couleurs.

7. Application du procédé selon l'une des revendications 1 à 5 à la détection d'obstacles sur voies de roulement, caractérisée en ce que l'analyse de séquences d'images vidéo routières conduit à l'extraction de routes dans les images et à la localisation éventuelle d'obstacles lorsque le masque de la route est discontinu.

8. Application selon la revendication 7, caractérisée en ce qu'un dispositif de fusion de données destiné à recevoir simultanément les informations issues d'un dispositif d'analyse de séquences d'images selon la revendication 6 et des informations issues du traitement de signaux issus d'autres moyens détecteurs d'obstacles (1, 2), est prévu pour générer des informations relatives aux obstacles détectés sur la route telle qu'analysée par la caméra et résultant des séquences d'images d'une part, et telle qu'analysée par les autres moyens détecteurs d'autre part, ce dispositif de fusion de données étant reliée à un ensemble de visualisation et d'alarmes (8).

## Claims

1. Method of analysing road image sequences captured by a camera on board a travelling vehicle, for extracting roads in the images, characterized in that it includes:

   - a first step of analysis (130, 131, 140) of the luminance information of the image video signals so as to extract the contours and regions of the images and establish a road mask;
   - a second step (110) of analysis of the chrominance information of the image video signals comprising the substeps of:

     - determining the average values of the blue, red, green components for the image points around a current point and
     - determining the points for which a discrepancy between the maximum of the average value of the blue component and the average value of the red or green component exceeds a predefined threshold and
     - assigning of a point to the "non-road" class if the said discrepancy is greater than the said threshold;

   - a third step (150) which combines the road mask obtained from analysing the luminance information with the points determined from analysing the chrominance information, for extracting the contour of the road.

2. Method according to Claim 1, characterized in that the step of analysing the luminance information includes:

   - a phase (130) of calculating the gradients over the luminance signal, the amplitudes of the gradients calculated at the various image points constituting a contours image,
   - a phase of calculating a region characteristic defining a road mask from the image of the contours during which an averaging filtering (131) in a local neighbourhood of the current point is performed and gives for each image point a characteristic value of the energy of the signal in the local neighbourhood considered, then a step (132) of thresholding so as to retain only the energy values which are greater than a threshold and are associated with the segments of image contours of the road edges in the image, and of processing of the contour segments so as to render them connected, and finally of filling in of the region delimited by the road edges.

3. Method according to one of Claims 1 and 2, characterized in that the step of analysing the chrominance information (110) uses the fact that in the road image sequences, the roads comprise no green or red colorimetric dominant and includes

   - a phase (112) of calculating average components of the three primary colours around a current point, and of determining the maximum average component between the two green and red components,
   - a comparison (113) of this maximum value and of the value of the blue average component, followed by a phase (116) of testing the difference between these values with respect to a threshold, the points for which this difference is greater than the threshold being definitely situated off the road.

4. Method according to one of Claims 1 to 3, characterized in that the step (150) of combining the road mask related information which was established during the first step and the oft-road image zone related information which was obtained in the second step establishes precisely the travel lanes contained in the initial road image sequences and possibly to locate obstacles on these travel lanes.

5. Process according to any one of the preceding claims, characterized in that the step of analysing the luminance information and the step of analysing the chrominance information are performed in parallel.

6. Device for analysing road image sequences emanating from a camera (3) and available in the form of digital colour components and after conversion of the colour components, in the form of a luminance component, which device is intended for implementing the analysis method according to one of Claims 1 to 5, characterized in that it includes

   - a contour and regions analysis device (13) whose input is intended to receive the image luminance signal,
   - a colours analysis device (11) whose input is intended to receive the three colour components constituting the video image,
   - and a road extraction device (15) linked to the outputs of the contours and regions analysis device and of the colours analysis device.

7. Application of the method according to one of Claims 1 to 5 to the detection of obstacles on the travel lanes, characterized in that the analysis of road video image sequences leads to the extraction of roads in the images and to the possible locating of obstacles when the road mask is discontinuous.

**8.** Application according to Claim 7, characterized in that a data fusion device intended to simultaneously receive the information emanating from a device for analysing image sequences according to Claim 6 and information emanating from the processing of signals emanating from other obstacles detector means (1, 2), is provided so as to generate information relating to the obstacles detected on the road as analysed by the camera and resulting from image sequences on the one hand, and as analysed by the other detector means on the other hand, this data fusion device being linked to a display and alarm assembly (8).

**Patentansprüche**

**1.** Verfahren zur Auswertung von Straßenbildfolgen die durch eine an Bord eines sich bewegenden Fahrzeugs befindliche Kamera aufgenommen werden, durch Extrahierung der Straßen in den Bildern, gekennzeichnet durch:

- einen ersten Schritt zur Auswertung (130, 131, 140) der Luminanzinformationen der Bild-Videosignale zur Extrahierung der Konturen und Bereiche der Bilder und zum Bilden einer Straßenmaske,
- einen zweiten Schrift (110) zur Auswertung der Chrominanzinformationen der Bild-Videosignale mit folgenden Unterschritten:

  - Ermittlung der Mittelwerte der blauen, roten und grünen Komponenten für die Bildpunkte um einen laufenden Punkt und

  - Ermittlung der Punkte, für die eine Abweichung zwischen dem Maximum des Mittelwertes der blauen Komponente und dem Mittelwert der roten oder der grünen Komponente einen vorbestimmten Schwellwert übersteigt, und Zuordnung eines Punktes zu der Klasse "Keine Straße", wenn diese Abweichung oberhalb des Schwellwertes liegt,

- einen dritten Schritt (150), der die aus der Auswertung der Luminanzinformationen erhaltene Straßenmaske mit den aus der Auswertung der Chrominanzinformationen ermittelten Punkten kombiniert für die Extrahierung der Straßenkontur.

**2.** Verfahren nach Anspruch 1, dadurch gekennzeichnet, daß der Schritt für die Auswertung der Luminanz folgendes enthält:

- eine Phase (130) zur Berechnung der Gradienten für das Luminanzsignal, wobei die Amplituden der für die verschiedenen Bildpunkte berechneten Gradienten ein Bild der Konturen darstellen,

- eine Phase zur Berechnung einer Bereichseigenschaft, die eine Straßenmaske der Straße aus dem Bild der Konturen definiert, in deren Verlauf eine Mittelwertfilterung (131) in einer örtlichen Nähe des laufenden Punktes erfolgt und für jeden Bildpunkt einen kennzeichnenden Wert der Energie des Signals in der betrachteten örtlichen Nachbarschaft, dann einen Schritt (132) zur Schwellwertbildung, um nur die Energiewerte oberhalb eines Schwellwertes zu erhalten, die zu den Segmenten der Konturbilder für die Straßenränder des Bildes gehören, und zur Verarbeitung der Segmente der Kontur, um sie zu verknüpfen, und schließlich zur Ausfüllung des durch die Straßenränder umgrenzten Bereichs.

**3.** Verfahren nach einem der Ansprüche 1 und 2, dadurch gekennzeichnet, daß der Schrift (110) der Auswertung der Chrominanzinformationen die Tatsache ausnutzt, daß in den Straßenbildfolgen die Straßen keinen nennenswerten grünen oder roten Farbanteil aufweisen, und folgendes enthält:

- eine Phase (112) zur Berechnung der mittleren Komponenten der drei Grundfarben um einen laufenden Punkt und zur Ermittlung der maximalen mittleren Komponente zwischen den beiden Komponenten Grün und Rot,
- einen Vergleich (113) dieses Maximalwertes und des Wertes der mittleren Komponente Blau, gefolgt von einer Phase (116) zur Prüfung des Unterschiedes zwischen diesen Werten bzgl. eines Schwellwertes, wobei die Punkte, für die dieser Unterschied oberhalb des Schwellwertes liegt, mit einer gewissen Sicherheit außerhalb der Straße liegen.

**4.** Verfahren nach einem der Ansprüche 1 bis 3, dadurch gekennzeichnet, daß der Schrift (150) der Kombination der Informationen für die Straßenmaske, die im Laufe des ersten Schrittes entstehen, und die Informationen für einen Bildbereich außerhalb der Straße, die in dem zweiten Schrift gewonnen werden, genau die Fahrwege festlegt, die in den ursprünglichen Straßenbildfolgen enthalten sind, und gegebenenfalls zur Ortung der Hindernisse auf diesen Fahrwegen.

**5.** Verfahren nach einem der vorangehenden Ansprüche, dadurch gekennzeichnet, daß der Schrift der Auswertung der Luminanzinformationen und der Schrift der Auswertung Chrominanzinformationen parallel erfolgen.

**6.** Vorrichtung zur Auswertung von Straßenbildfolgen, die von einer Kamera (3) stammen und in der Form von digitalen Farbkomponenten und nach einer Umsetzung der Farbkomponenten in der Form einer Luminanzkomponente verfügbar sind, die für eine Durchführung der Auswertung nach einem der Ansprüche 1 bis 5 bestimmt ist, gekennzeichnet durch

- eine Auswertvorrichutng für die Kontur und die Bereiche (13), deren Eingang für den Empfang des Luminanzsignals des Bildes vorgesehen ist,
- eine Vorrichtung (11) zur Auswertung der Farben, dessen Eingang zum Empfang der das Videobild darstellenden drei Farbkomponenten bestimmt ist,
- und eine Vorrichtung (15) zur Extrahierung der Straße, die mit den Ausgängen der Vorrichtung zur Auswertung der Konturen und Bereiche und der Vorrichtung zur Auswertung der Farben verbunden ist.

**7.** Anwendung des Verfahrens nach einem der Ansprüche 1 bis 5 für die Erkennung von Hindernissen auf Fahrbahnen, dadurch gekennzeichnet, daß die Auswertung der Straßenbildfolgen zu einer Extrahierung der Straßen in den Bildern zu einer möglichen Ortung von Hindernissen führt, wenn die Straßenmaske diskontinuierlich ist.

**8.** Anwendung nach Anspruch 7, dadurch gekennzeichnet, daß eine Vorrichtung zur Datenfusion, die zum gleichzeitigen Empfang der Informationen von einer Vorrichtung zur Auswertung der Bildfolgen nach Anspruch 6 und von Informationen aus der Verarbeitung der Signale von anderen Erkennungsmitteln für Hindernisse (1,2) vorgesehen ist, um Informationen über auf der Straße erkannte Hindernisse zu erzeugen, so wie sie einerseits durch die Kamera ausgewertet werden und sich aus den Bildfolgen ergeben, und so, wie sie anderseits durch die anderen Erkennungsmittel ausgewertet werden, wobei diese Vorrichtung für die Datenfusion mit einer Anzeige- und Alarm-Anordnung (8) verbunden ist.

ENVIRONNEMENT DU VEHICULE

RADAR *1*

LIDAR *2*

DISPOSITIF DE TRAITEMENT DU SIGNAL
5

CAMERA CCD *3*

CAMERA IR *4*

DISPOSITIF DE TRAITEMENT D'IMAGES
6

DISPOSITIF DE FUSION DE DONNEES
7

ENSEMBLE DE VISUALISATION ET D'ALARMES
8

## FIG.1

IMAGE ORIGINALE

CAMERA CCD *3*

R V B

C.A.N. : R.V.B. MEMOIRE
10

DISPOSITIF DE CONVERSION Y
12

DISPOSITIF D'ANALYSE COULEURS
11

DISPOSITIF D'ANALYSE CONTOURS/REGIONS
13

## FIG.2

DISPOSITIF D'EXTRACTION DE ROUTE ET DE LOCALISATION D'OBSTACLES
15

LECTURE
IMAGE SOURCE
UNE TRAME —100

CALCUL DES GRADIENTS
SUR LE SIGNAL
DE LUMINANCE —130

IMAGE DES
AMPLITUDES
CONTOURS

CALCUL DE CARACTERISTIQUES REGION: —131
FILTRAGE SUR VOISINAGE DE L'IMAGE
DES AMPLITUDES DU GRADIENT

INRJ

132— PREDETERMINATION DES
BORDS DE ROUTE

ANALYSE
COULEUR
—110

150— EXTRACTION DE LA ROUTE
METHODE PAR CONNECTIVITE

# FIG.3

SORTIE

IMAGE
SOURCE

MASQUE 5×5
HORIZONTAL

| 1 | 1 | 1 | 1 | 1 |
|---|---|---|---|---|
| 1 | 1 | 1 | 1 | 1 |
| 0 | 0 | 0 | 0 | 0 |
| -1 | -1 | -1 | -1 | -1 |
| -1 | -1 | -1 | -1 | -1 |

GH

MASQUE 5×5
VERTICAL

| -1 | -1 | 0 | 1 | 1 |
|----|----|---|---|---|
| -1 | -1 | 0 | 1 | 1 |
| -1 | -1 | 0 | 1 | 1 |
| -1 | -1 | 0 | 1 | 1 |
| -1 | -1 | 0 | 1 | 1 |

GV

$$G = \sqrt{GH^2 + GV^2}$$

# FIG.4

IMAGE DES
AMPLITUDES

| ROUGE | VERT | BLEU |

BOUCLE D'ANALYSE COULEUR
DES POINTS D'IMAGE SUCCESSIFS

FIN

111

VAL - R = MOYENNE - R (PTS) $\}$
VAL - V = MOYENNE - V (PTS) $\}$ SUR BLOC 3×3 AUTOUR
VAL - B = MOYENNE - B (PTS) $\}$ DE PTS

MAX - R - V (PTS) = MAX ( VAL - R (PTS), VAL - V (PTS) )

112

VAL - B (PTS)
$\leq$
MAX - R - V (PTS)
?

113

NON    OUI

MASQUE COULEUR (PTS)
= 0

115

MASQUE COULEUR (PTS)
=
MAX - R - V (PTS) - VAL - B (PTS)
=
VAL - PIX

114

PTS $\in$
CLASSE "NON ROUTE"

OUI    MASQUE COULEUR
> S - MASK    NON

117                                116

FIG. 5

## FIG.6

ILMIN

ROUTE

TEST FIN

REF    P(ICD,ILD)

DLIG

FLIG    IFINLIG

DCOL    FCOL

100

40

LIG

COL

1

## FIG.7

| 151 | INITIALISATION Pi(ICD-ILD) |
| 152 | SP COLOR |
| 153 | BORNES |
| 154 | SENS(-1,+1):il FLAG COLOR -0 |
| 155 | BOUCLE LIGNE IPL=IPL+il |
| 156 | BOUCLE RECHERCHE SUR LA LIGNE: ic = +1, IPC =IPC+ic |

SP RECH.

FIN DE RECH. LIGNE — 157

OUI

NON

FLAG COLOR = 1

SP COLOR

FIN DE BALAYAGE VERTICAL ?

NON

OUI

FLAG COLOR =0 ?

NON

INVERSION DES BORNES OU BALAYAGE

OUI

FIN

SOUS PROGRAMME:
SP COLOR

POINT COURANT (IPC,IPL)

FIG.8

DCOL    contour          contour    FCOL

SOUS PROGRAMME:
SP RECH.

FIG.9

SCENE
ORIGINALE
ISSUE DE
LA CAMERA
CCD (R.V.B.)

C.A.N.
MEMOIRE

ACQUISITION ET
NUMERISATION

10

PROCESSUS D'EXTRACTION
DE LA ROUTE

PROCESSUS DE DETECTION
D'OBSTACLES

100

200

FIG. 10

IMAGE SEGMENTEE